# EUROPEAN PATENT SPECIFICATION

(11) **EP 1 268 032 B1**
(45) Date of publication and mention of the grant of the patent: **30.03.2005**
(21) Application number: 01921550.8
(22) Date of filing: 06.04.2001
(51) Int. Cl.: B01D 33/00, B01D 33/03, B01D 33/41

(54) **A SCREEN ASSEMBLY, A SUPPORT STRUCTURE, A METHOD OF MAKING SAME AND A VIBRATORY SHAKER**
SIEBKONSTRUKTION, STÜTZSTRUKTUR UND HERSTELLUNGVERFAHREN UND VIBRATIONSTRENNVORRICHTUNG
ENSEMBLE DE CRIBLAGE, STRUCTURE DE SUPPORT, PROCEDE DE REALISATION, ET SEPARATEUR A VIBRATIONS

(30) Priority: 06.04.2000 US 544572
(43) Date of publication of application: 02.01.2003
(73) Proprietor: Varco I/P, Inc., Houston, TX 77051 (US); LUCAS, Brian Ronald, Warlingham, Surrey CR6 9HJ (GB)
(72) Inventor: SCHULTE, David, Lee, Broussard, LA 70518 (US); ADAMS, Thomas, Cole, Hockley TX 77447 (US); SEYFFERT, Kenneth, Wayne, Houston, TX 77018 (US); LARGENT, David, Wayne, Cleveland, TX 77327 (US); MCCLUNG, Guy, Lamont, III, Spring, TX 77379 (US); WALKER, Jeffery, Earl, Lafayette, LA 70508 (US); Murray Hector Murdo, Houston TX 77041 (US)
(74) Representative: Lucas, Brian Ronald
(86) International application number: PCT/GB2001/001610
(87) International publication number: WO 2001/076719

(56) References cited:
- US-A- 1 279 630
- US-A- 4 575 421
- US-A- 5 221 008
- US-A- 5 417 858
- US-A- 6 000 556

## Description

The present invention relates to a screen assembly, to a support structure, and to a method of making same. The invention also relates to a vibratory shaker.

Screen assemblies are generally used in shale shakers. A typical use for a shale shaker is separating solids from liquids in the drilling of a wellbore for oil and gas. During drilling of a wellbore, a liquid known as mud is circulated in the well. Circulation involves introducing mud into the well and pumping the mud down a pipe such as a drill string. The mud picks up cuttings and other particles from the bottom of the wellbore and are returned to the top of the well via an annulus formed by the drill pipe and the wellbore. Particle and rock laden mud exits the well and is reconditioned ready to be reused. Part of the conditioning process involves filtering the mud in a vibratory shaker, such as a shale shaker. The shale shaker generally comprises a bucket, a pretensioned screen for screening the particle laden mud and a motor for vibrating the bucket and screen. A typical example of a shale shaker is disclosed in PCT Publication No. WO 96/33792, owned by the applicant for the present application. It will be appreciated that the screen needs to be replaced frequently due to heavy wear. It has been found that screens can be pretensioned and mounted on a supporting structure to form a screen assembly. The screen assembly may be placed in and removed from the shale shaker quickly, thereby reducing downtime of the shale shaker. Such a screen assembly is disclosed in EP-A-0 169 698. The screen assemblies are generally expensive to manufacture, are heavy and are prone to failure in use.

US-A-1,279,630 discloses a heavy duty plate screen for sizing anthracite, the plate screen comprising side and end potions folded to form sides and ends, the ends used in an interface between adjacent plate screens.

According to the present invention there is provided a support structure for a screen assembly for a vibratory separator, the support structure comprising a body member made of a single integral sheet-like material, said body member having a first portion and a second portion, said first portion having a plurality of rib supports bent or folded out from spaced apart openings, slots or cuts of said first portion, the second portion having at least one opening therethrough bent or folded over onto the first portion so that the underside of the second portion contacts top surfaces of the rib supports.

Preferred optional aspects of the support structure of the invention are set out in claims 2 to 11.

The invention also provides a screen assembly comprising a support structure of the invention, and further comprising at least one sheet of screening material over said at least one opening.

Preferred optional aspects of the screen assembly of the invention are set out in claims 13 to 15.

The invention also provides a vibratory separator comprising at least one support screen or screen assembly of the invention.

The invention also provides a method of making a screen support as claimed in any of claims 1 to 11, the method comprising the steps of:
providing a blank of sheet-like material that is cut, pressed or machined such that it includes a first portion and a second portion;
making a series of spaced apart openings, slots or cuts in said first portion;
making at least one opening in said second portion;
bending or folding out support ribs from said openings slots or cuts of said first portion;
folding or bending said second portion over said first portion so that an underside of the second portion contacts top surfaces of the rib supports..

For a better understanding of the present invention, reference will now be made, by way of example, to the accompanying drawings, in which:
Figure 1A is a top plan view of a screen assembly not in accordance with the present invention, with parts cut away;
Figure 1B is a top plan view of a structural part of the screen assembly of Figure 1A;
Figure 1C is a side elevation of the structural part of the screen assembly shown in Figure 1B;
Figure 1D is a cross-sectional view along line 1D-1D of Figure 1B;
Figure 1E is a top plan view of a blank used in the manufacture of the structural part of the screen assembly of Figure 1B;
Figure 1F is a top plan view of a blank used in the manufacture of part of the screen assembly of Figure 1A;
Figure 1G is a side elevation of two screen assemblies of the type shown in Figure 1A, arranged end-to-end, indicating the same reference numerals for like parts;
Figure 2 is a perspective view of a shale shaker in accordance with the present invention incorporating a screen assembly according to the present invention;
Figures 3A to 3G are each a top plan view of an alternative blank used in the formation of a structural part of a screen assembly not in accordance with the present invention;
Figure 4A is a top plan view of a blank used in the formation of an embodiment of a structural part of the present invention, the structural part having first and second portions;
Figure 4B is a top plan view of the blank of Figure 4A with slots cut in the first portion of the blank to facilitate the formation of support ribs;
Figure 4C is a top plan view of the blank of Figure 4B with a pattern of openings formed in the second portion;
Figure 4D is a side elevation of the blank of Figure 5C with support ribs projecting from the first portion of the blank;
Figure 4E is a perspective view of the blank of Figure 4D with the second portion (the pattern of openings not shown for clarity) folded with respect to the first portion with the support ribs;
Figure 4F is a side elevation with the second portion folded over onto the first portion, with side portions folded towards the first portion;
Figure 4G is a top plan view of the structural part of Figure 4F;
Figure 4H is a cross-sectional view along line 4H-4H of Figure 4G;
Figure 4I is a side elevation of a screen assembly of the present invention, including the structural part as shown in Figure 4A to 4H;
Figure 4J is a cross-sectional view along line 4J-4J of Figure 4K;
Figure 4K is a top plan view of the screen assembly as shown in Figure 4I; and

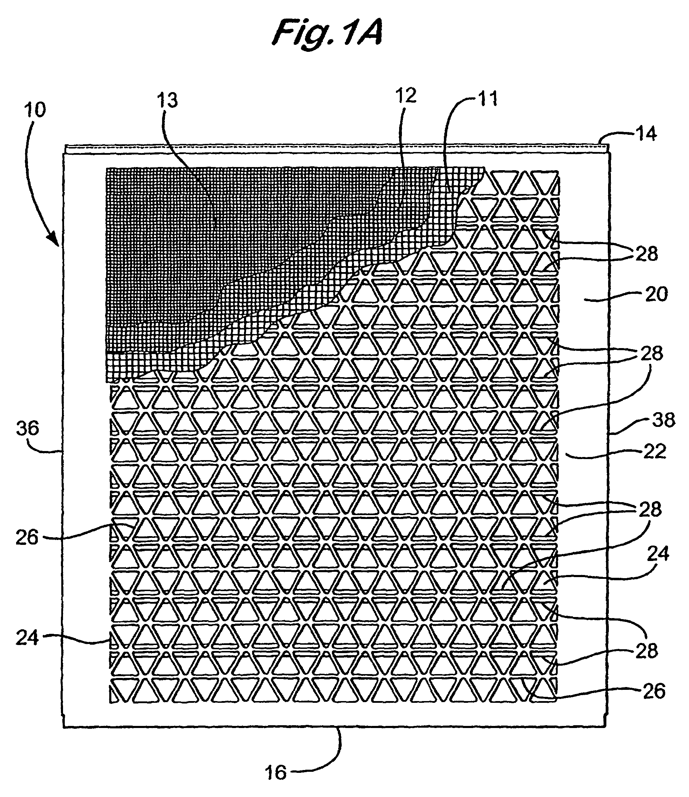

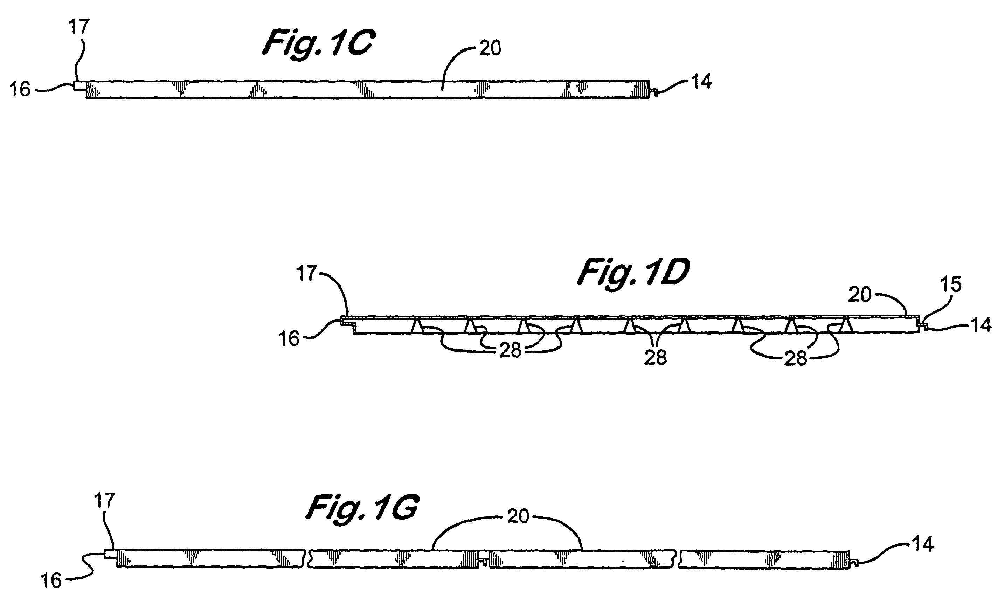

Referring to Figure 1A, there is shown a screen assembly generally identified by the reference numeral 10 not in accordance with the present invention. The screen assembly 10 comprises a support structure 20, made from a single piece of material and identified herein and in trading as UNIBODY. The support structure is made from a sheet of metal such as steel or aluminium but may be made from any other suitable material, including a plastics material. The screen assembly 10 has, optionally, three layers 11, 12, 13 of screening material bonded to a top surface 22 of the support structure 20. Preferably, the layers 11, 12, 13 are also bonded together over substantially their entire surface area with, for example a hotmelt glue.

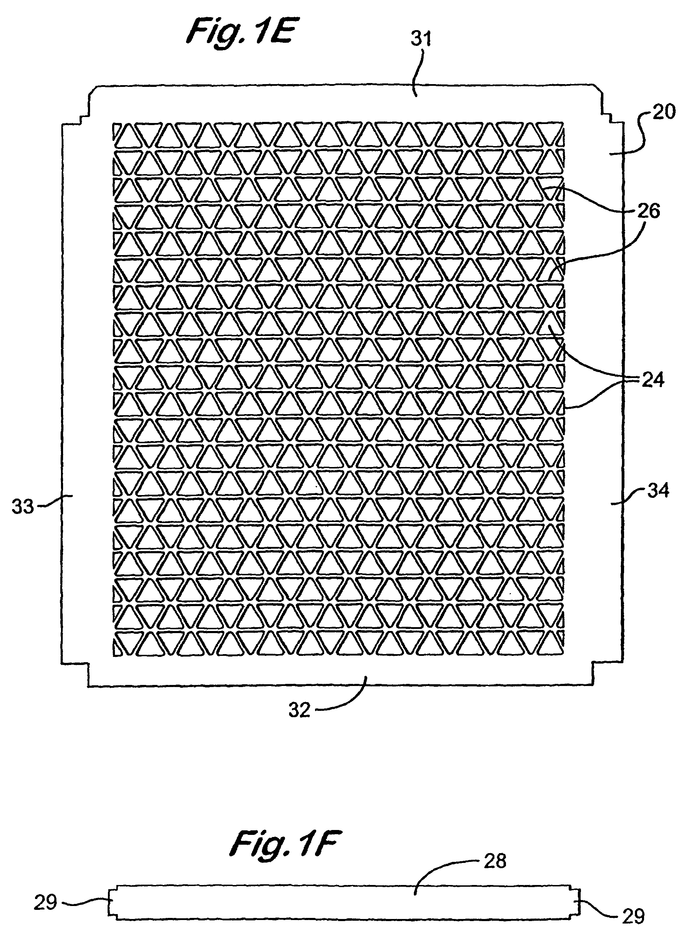

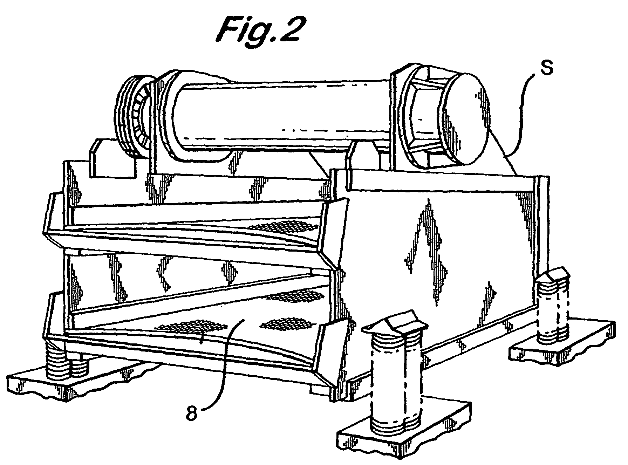

A plurality of triangular openings 24 are provided through the support structure 20. The pattern is disclosed in our co-pending European Publication No. EP-A-1,002,588, which discloses a panel for a screen, said panel comprising a plurality of groups of perforations, each group comprising six generally equally triangular apertures arranged with their apices facing a central portion, wherein the apices of two opposing ones of said triangular apertures are spaced apart further than the apices of opposed ones of the remaining triangular apertures. The triangular openings 24 are defined by a plurality of support members 26. Optionally, a plurality of spaced-apart substantially parallel ribs 28 connected to the support structure 20, which in one aspect are welded to a support structure 20. In this particular embodiment the ribs 28 are positioned along a substantial majority of their length directly beneath one of the support members 26 that extends across a major portion of the support structure 20. The support structure 20 has spaced-apart sides 36, 38. As shown in Figure 1C, the screen assembly 10 has an end 14 and a "ledge" end 16. The ledge end has an upper ledge portion 17 that rests on a shoulder 15 of an end 14 of an adjacent screen. Thus one screen end 16 seals against another screen end 14 when such screens are used end-to-end, as shown in Figure 1G. In one particular embodiment, (not shown) four screens are used on a shaker, such a shaker is shown in Figure 2, in two end-to-end pairs with the pairs side by side. Each pair is positioned in "C" channels. One of the screens is moved into the "C" channel supports ledge end 16 first. Then the ledge end 16 of the second screen is moved into the "C" channels so that it sealingly abuts the end 14 of the first screen. The other pair is similarly installed. As shown in Figure 1E, the support structure 20 is, initially, a single integral piece of material in which the pattern of openings 24 is formed, e.g. by any suitable cutting tool, punch, laser, or plasma beam or arc. Alternatively, the area shown provided with the openings 24 in Figure 1E may be removed such that a large opening is left, so that all that is formed is a four-sided structure to which is applied one, two, three or more layers of screening sheet(s) and/or screening material; including but not limited to a perforated sheet or plate and/or any desired number of layers of screening material, bonded or unbonded.

Portions 31, 32, 33, and 34 are folded to form, respectively, the end, 14, end 16 and sides 36, 38. The various portions of the support structure 20 can be folded with any suitable press brake, pliers, or bending device with or without applying heat to the structure. Figure 1F shows a rib 28 which has not yet been bent or folded into a U or V shape, as shown in Figure 1D. Ends 29 may be introduced into corresponding holes or slots (not shown) in the sides 36, 38 to facilitate securement of the ribs.

The screen assembly 10 has none, one, two, three or more layers of screening material, i.e., screen, mesh, and/or cloth made, e.g., of stainless steel wire and/or plastic. Any such layer or combination of layers may be bonded together (glued, welded, and/or sintered) in any known manner and/or bonded to the support structure 20 in any known manner. Any such layer or layers of screening material may be substantially flat or may be undulating (with a series of alternating ridges and valleys) as is well known in the art.

Figure 2 shows a shale shaker S according to the present invention with a screen assembly 8 according to the present invention which may be any screen assembly disclosed herein according to the present invention. Any suitable known shaker or vibratory separator may employ one or more screens according to the present invention including but not limited to shakers as disclosed in U.S. Patents 5,392,925 and 5,641,070 and in the references cited in each patent.

Edges on both sides of a support structure according to the present invention can form hook strips. In such an embodiment with hook strips a hook end (like the hook end 14), Figure 1C) and/or a ledge end (like the ledge end 16, Figure 1C) may be deleted.

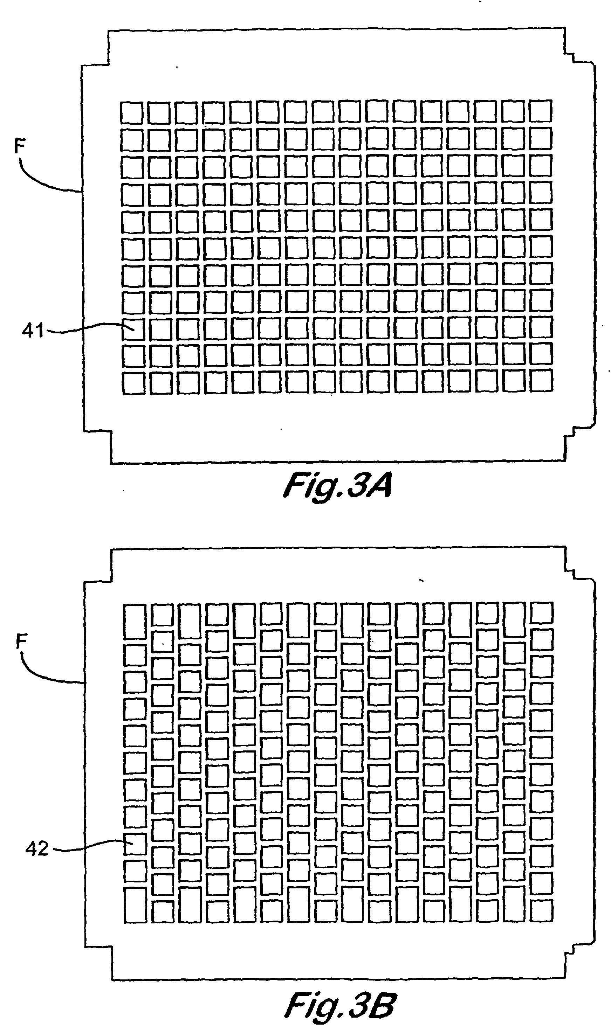

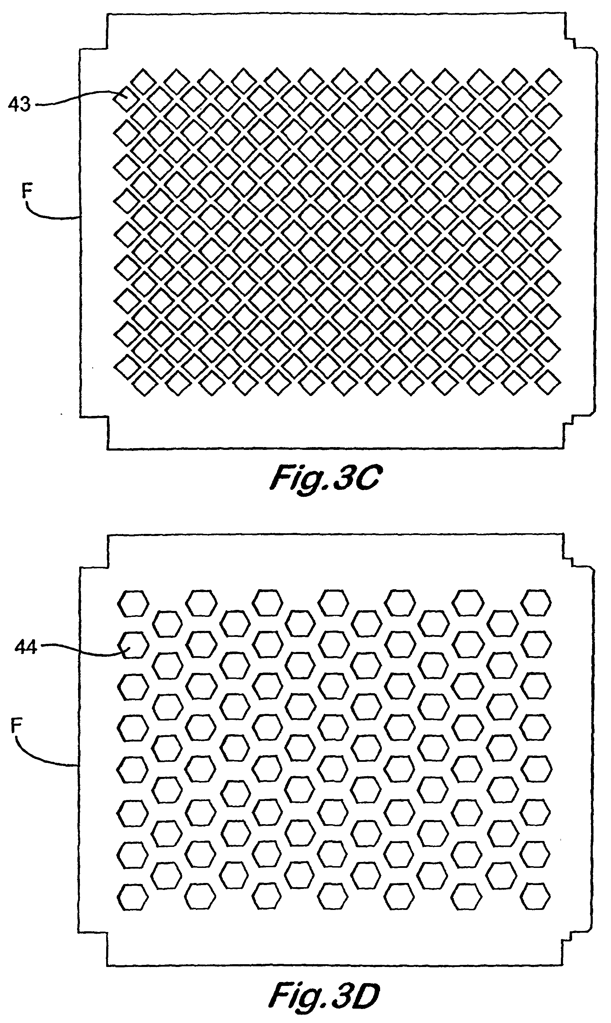

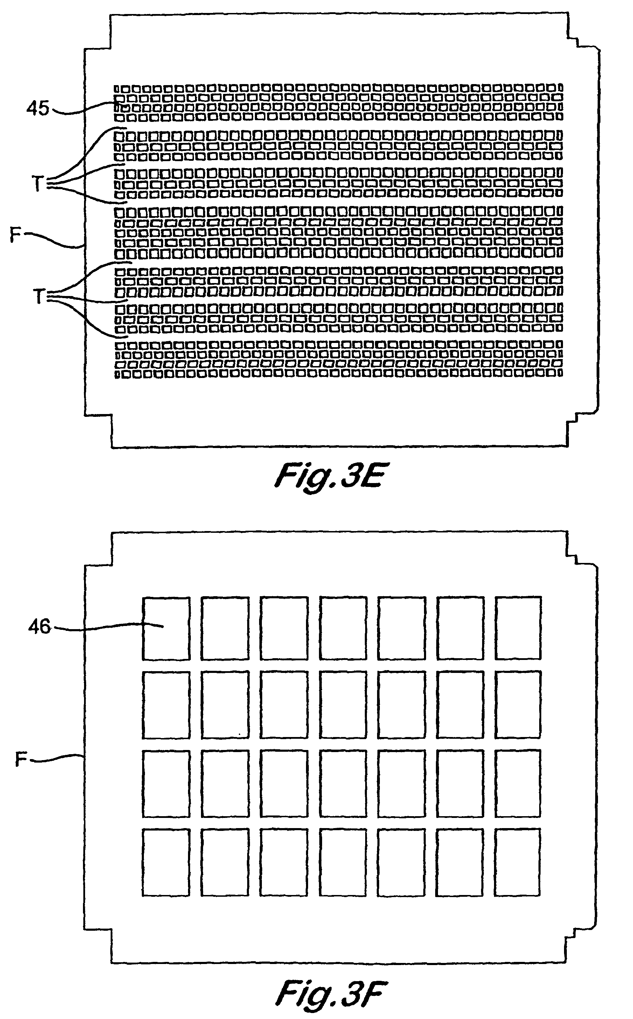

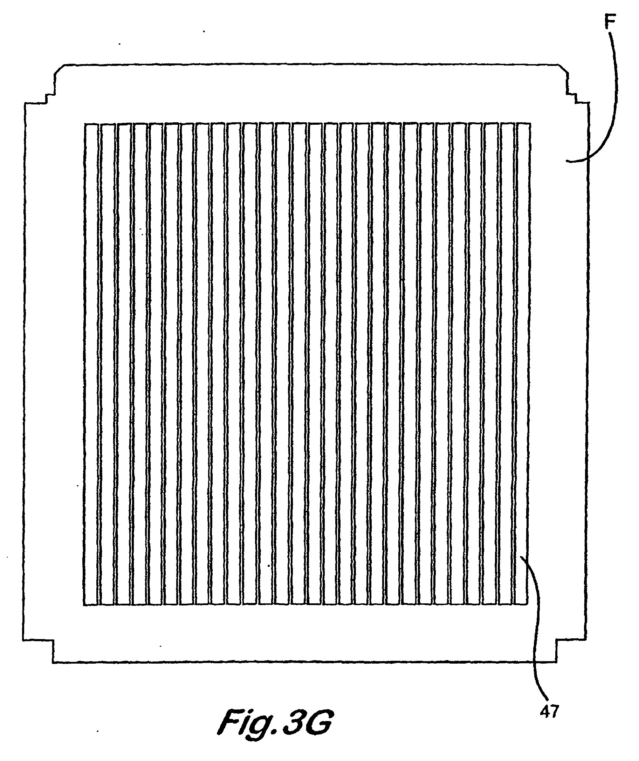

Figures 3A to 3G are top views of alternative embodiments for the support structure F, each with a series of different-shaped openings 41, 42, 43, 44, 45, 46, 47 therethrough, respectively. Instead of placing sheets or layers of screening material over the openings, it is within the scope of this invention to emplace a plug or module with screening material in some or all of the openings of any screen assembly disclosed herein according to the present invention. In certain aspects, the plugs or modules are as disclosed in our U.S. Patents 5,988,397 or 5,490,598.

Also, as shown in the embodiment of Figure 3E, it is within the scope of this invention to provide one or more areas or strips T without openings.

A screen assembly with a support structure according to the present invention needs no separate pieces added to form parts, e.g. sides, hook strips, hook end, ledge end, etc. and is, therefore, relatively less expensive to make. By reducing or eliminating seams and connection areas, a relatively more substantial screen assembly is possible.

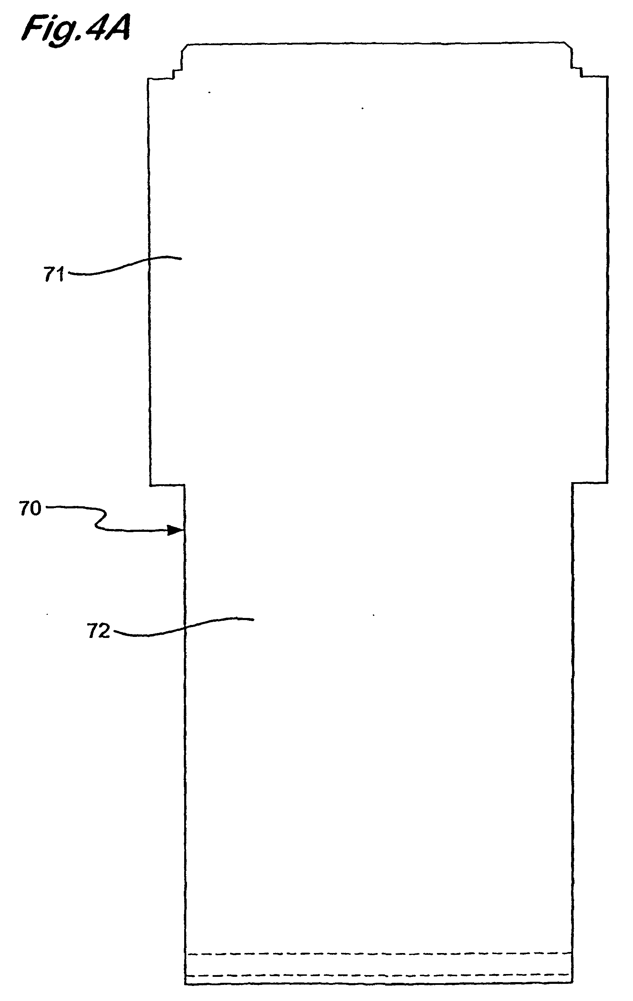

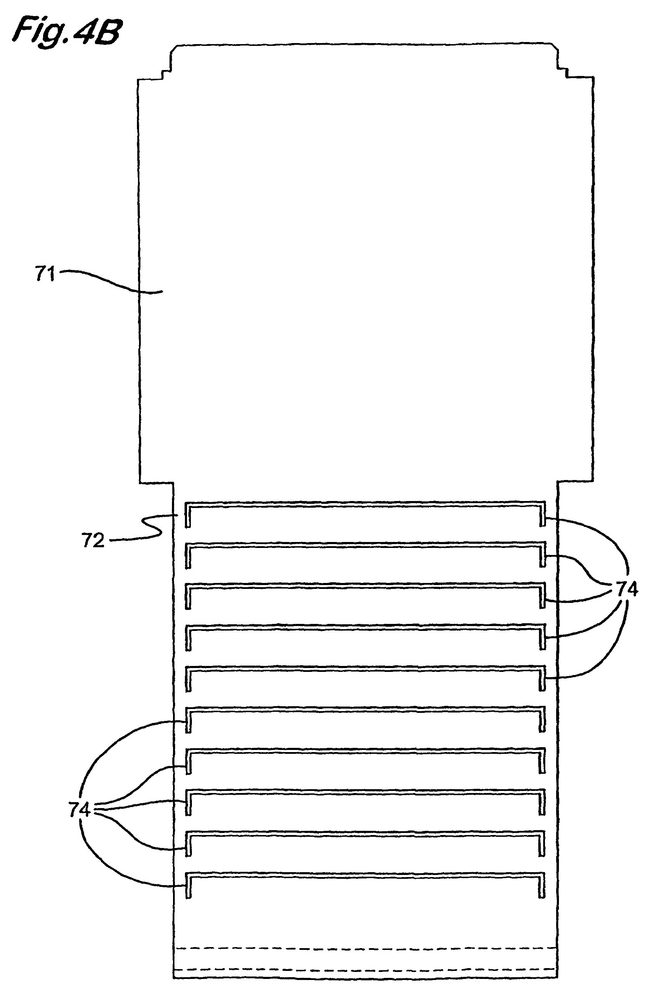

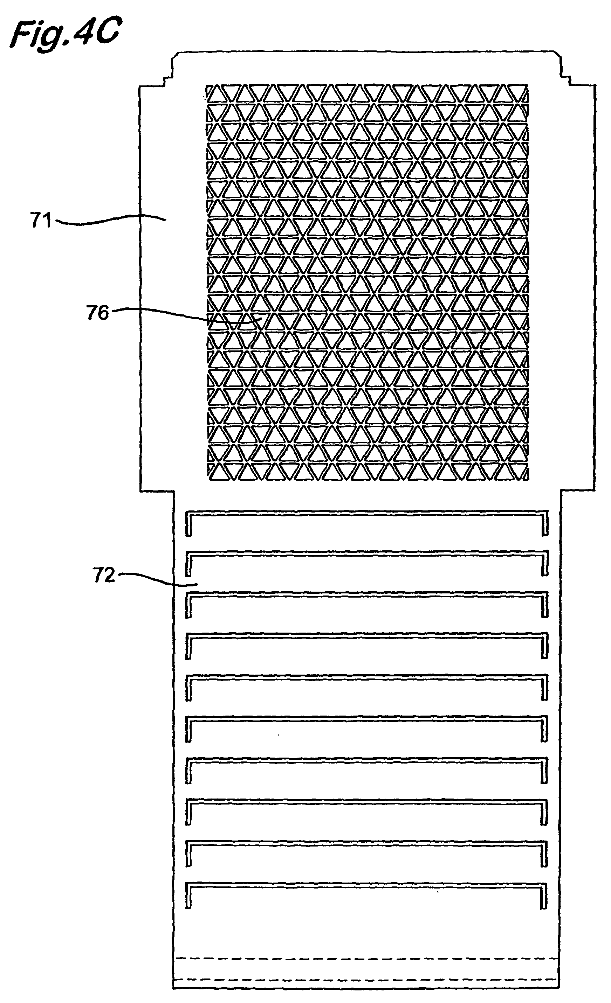

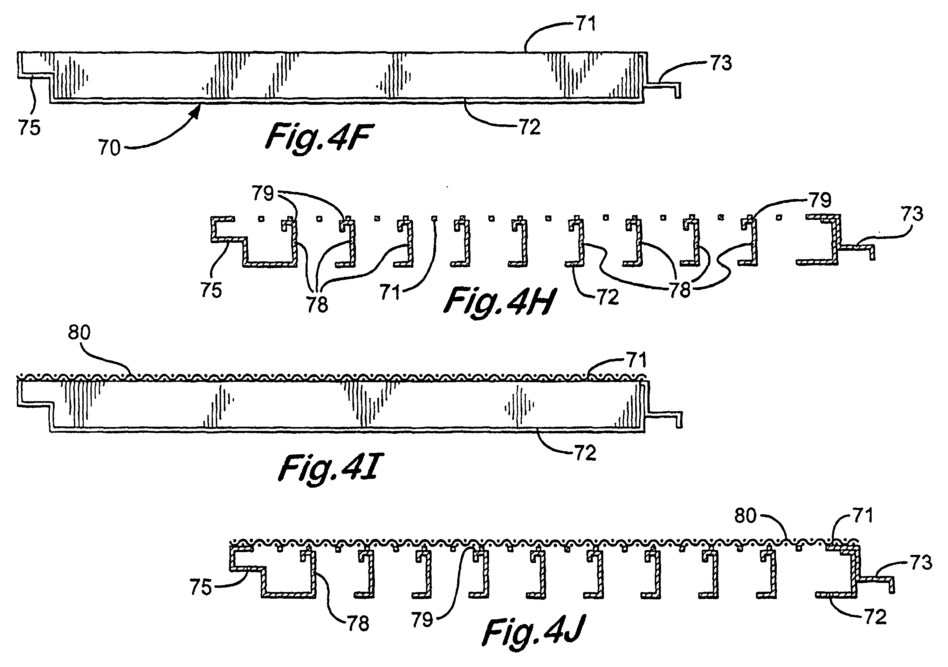

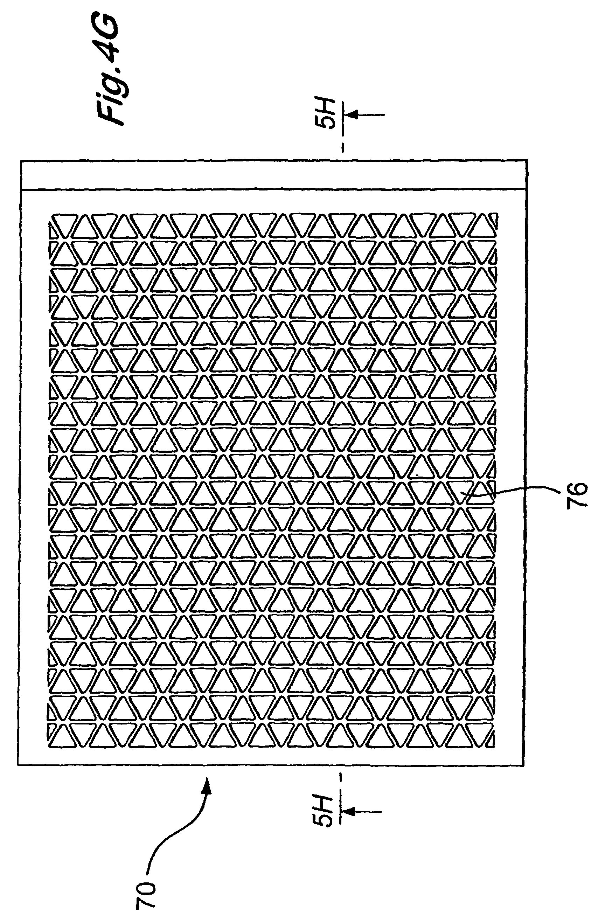

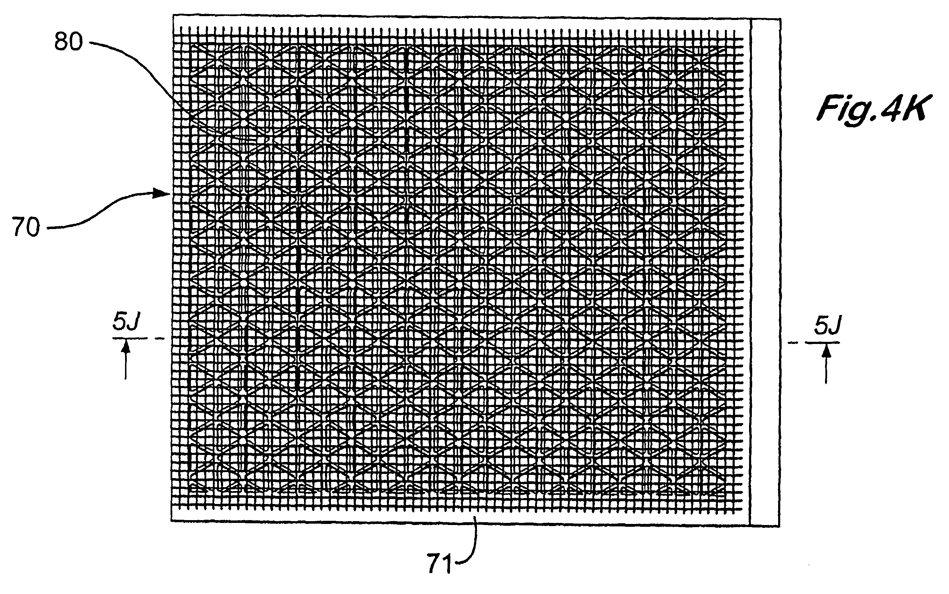

Figures 4A to 4E illustrate stages in the manufacture of a support structure 70 in accordance with the present invention. The support structure 70 is initially a blank that is cut, pressed or machined to the shape shown in Figure 4A that includes a first portion 72 in which will be made a series of rib supports and a second portion 71 in which will be made a pattern of openings. As shown in Figure 5B a series of slots 74 with right angle ends are made by, for example, cutting, drilling, punching, or machining in any suitable manner, in the first portion 72.

As shown in Figure 4C a pattern of openings 76 is made (cut, drilled, punched, or machined in any suitable manner) in the second portion 71. These openings and their pattern may be any suitable shape opening in any desired pattern, including, but not limited to, any opening shape and pattern disclosed herein. The openings 76 may be of such a size that no additional screening material is placed over them; or, alternatively, any screening material disclosed herein, bonded or unbonded, may be placed over the openings 76.

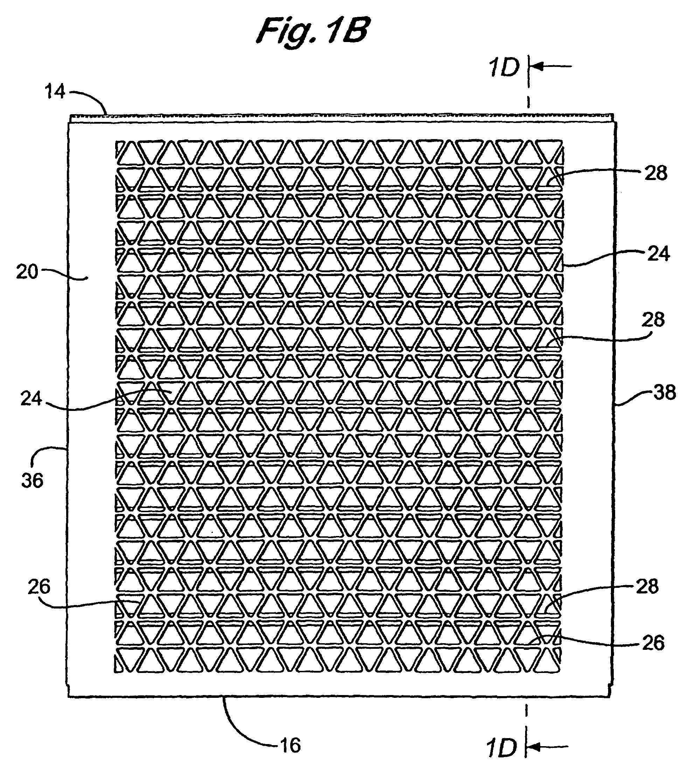

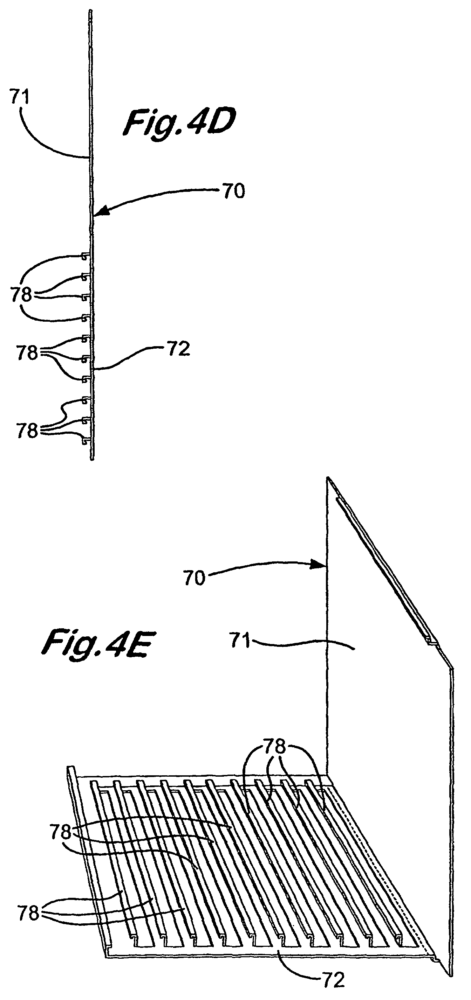

As shown in Figure 4D rib supports 78 have been bent or folded out from the first portion 72. The support ribs are bent or folded over at their ends to form a C-shape or flat topped end or hook-shaped end. As shown in Figures 4F to 4G the second portion 71 has been folded or bent over onto the first portion 72 so that an underside of the second portion 71 contacts top surfaces 79 of the rib supports 78. The second portion 71 may be glued, bolted, screwed, or welded to top surfaces 79 of the rib supports 78 [or Velcro™ material may be used to secure the second portion 71 to the ribs 78]. The shaped end to the support rib 78 provides rigidity and provides a flat top to abut the second portion 71, As shown in Figure 4E, in which the second portion 71 has been folded or bent with respect to the first portion 72. The shaped ends to the ribs 78 may line up with support members in the pattern of openings 76 in the second portion 76, as with the support members 26 and ribs 28, as shown in the previous embodiment with reference to Figure 1, which has the advantage that, in use, flow of fluid through the screening area is substantially unimpeded by the support ribs 78. The shaped ends may be as narrow as the support members of the pattern of openings 76 in the second portion 71, or may be slightly larger, which, in use may impede flow slightly.

Figures 4I to 4K show the structure of Figure 4F with screening material 80 thereon. The screening material 80 may be, in at least certain preferred embodiments, any known screen, screens, mesh, and/or meshes in any known combination, bonded or unbonded to each other, bonded or unbonded to the top portion 71, and/or of different weaves or similar weaves. As shown in Figures 4H and 4F the ends 73, 75 correspond, respectively, to ends 14 and 16 of the screen of Figure 1A and function similarly to effect the sealing end-to-end abutment of such screens.

## Claims

1. A support structure for a screen assembly for a vibratory separator, the support structure comprising a body member made of a single integral sheet-like material, said body member having a first portion (72) and a second portion (71), said first portion (72) having a plurality of rib supports (78) bent or folded out from spaced apart openings, slots or cuts (74) of said first portion (72), the second portion (71) having at least one opening (76) therethrough and bent or folded over onto the first portion (72) so that the underside of the second portion (71) contacts top surfaces of the rib supports (78).

2. A support structure as claimed in claim 1, wherein the second portion (71) has integral side portions folded to form a pair of spaced-apart integral side members.

3. A support structure as claimed in claim 1 or 2, wherein said second portion (71) has a plurality of openings (76) therethrough defining a pattern.

4. A support structure as claimed in claim 1, 2 or 3, wherein the body member (70) further comprises integral end portions folded to form a pair of spaced apart integral end members.

5. A support structure as claimed in Claim 4, wherein one of the pair of spaced-apart end portions (73, 75) is configured with a shoulder support portion (75) for sealingly abutting a screen ledge end of an adjacent screen.

6. A support structure as claimed in Claim 5, wherein one of the pair of spaced-apart end portions (73, 75) is configured with a ledge portion (73) for sealingly abutting a shoulder portion of an end of an adjacent screen.

7. A support structure as claimed in any of Claims 2 to 6, wherein the side portions (36; 38) include sub-portions foldable to form a hook strip on each of two opposed sides of the support structure.

8. A support structure as claimed in any preceding claim, wherein said rib supports (78) have ends which are folded into a flat top or C-shape.

9. A support structure as claimed in any preceding claim, further comprising a plurality of ribs (28) connected to and beneath the portion of the integral body member with the plurality of spaced-apart screening openings.

10. A support structure as claimed in Claim 9, wherein the plurality of ribs (28) are substantially parallel to each other.

11. A support structure as claimed in any preceding claim, wherein said support structure is integral with a filtering means (24).

12. A screen assembly comprising a support structure as claimed in any preceding claim, and further comprising at least one sheet of screening material (80) over said at least one opening (76).

13. A screen assembly as claimed in claim 12, wherein said screening material is an undulating screen (94).

14. A screen assembly as claimed in Claim 12 or 13, further comprising at least another layer of screening material overlaying said at least one sheet of screening material.

15. A screen assembly as claimed in Claim 12, 13 or 14, wherein said at least one sheet of screening material is bonded to the support structure, preferably with a hot melt glue.

16. A vibratory separator comprising at least one screen assembly as claimed in any of Claims 12 to 15.

17. A method of making a screen support as claimed in any of claims 1 to 11, the method comprising the steps of:
providing a blank of sheet-like material that is cut, pressed or machined such that it includes a first portion and a second portion;
making a series of spaced apart openings, slots or cuts in said first portion;
making at least one opening in said second portion;
bending or folding out support ribs from said openings slots or cuts of said first portion;
folding or bending said second portion over said first portion so that an underside of the second portion contacts top surfaces of the rib supports.

## Patentansprüche

1. Stützstruktur für eine Siebanordnung für eine Vibrationstrennvorrichtung, wobei die Stützstruktur ein Bauelement aus einem einzigen einstückigen blattartigen Material aufweist, wobei das Bauelement einen ersten Bereich (72) und einen zweiten Bereich (71) aufweist, der erste Bereich (72) mehrere Stützrippen (78) aufweist, die aus voneinander entfernt gelegenen Öffnungen, Schlitzen oder Ausschnitten (74) des ersten Bereiches (72) herausgebogen oder herausgefaltet sind, und der zweite Bereich (71) zumindest eine durchgehende Öffnung (76) aufweist und über den ersten Bereich (72) gebogen oder gefaltet ist, sodass die Unterseite des zweiten Bereiches (71) die oberen Oberflächen der Strukturrippen (78) berührt.

2. Stützstruktur nach Anspruch 1, wobei der zweite Bereich (71) integrierte Seitenbereiche aufweist, die aufgefaltet sind, um ein Paar von voneinander entfernt gelegenen integrierten Seitenelementen zu bilden.

3. Stützstruktur nach Anspruch 1 oder 2, wobei der zweite Bereich (71) mehrere hindurchgehende Öffnungen (76) aufweist, die ein Muster definieren.

4. Stützstruktur nach Anspruch 1, 2 oder 3, wobei das Bauelement (70) integrierte Endbereiche aufweist, die aufgefaltet sind, um ein Paar von voneinander entfernt gelegenen integrierten Endelementen zu bilden.

5. Stützstruktur nach Anspruch 4, wobei eines der Paare der voneinander entfernt gelegenen Endbereiche (73, 75) mit einem schulterartigen Stützbereich (75) zur dichten Anlage an einem vorspringenden Anschlagende eines benachbarten Siebes versehen ist.

6. Stützstruktur nach Anspruch 5, wobei ein von den zwei voneinander entfernt gelegenen Endbereichen (73, 75) mit einem vorspringenden Anschlagbereich (73) zur dichten Anlage an einem Schulterbereich eines Endes eines benachbarten Siebes versehen ist.

7. Stützstruktur nach einem der Ansprüche 2 bis 6, wobei die Seitenbereiche (36; 38) faltbare Unterbereiche umfassen, um einen Hakenstreifen auf beiden der zwei gegenüberliegenden Seiten der Stützstruktur zu bilden.

8. Stützstruktur nach einem der vorhergehenden Ansprüche, wobei die Stützrippen (78) Enden haben, die in eine flache Oberfläche oder eine C-Form gefaltet sind.

9. Stützstruktur nach einem der vorhergehenden Ansprüche, die ferner mehrere Rippen (28) aufweist, die mit dem Bereich des einstückigen Bauelementes mit den mehreren voneinander entfernt gelegenen Sieböffnungen verbunden und unterhalb dieses Bereiches gelegen sind.

10. Stützstruktur nach Anspruch 9, wobei die mehreren Rippen (28) im Wesentlichen parallel zueinander gelegen sind.

11. Stützstruktur nach einem der vorhergehenden Ansprüche, wobei die Stützstruktur in eine Filtereinrichtung (24) integriert ist.

12. Siebanordnung mit einer Stützstruktur nach einem der vorhergehenden Ansprüche, die ferner zumindest ein Blatt aus Siebmaterial (80) oberhalb der zumindest einen Öffnung (76) aufweist.

13. Siebanordnung nach Anspruch 12, wobei das Siebmaterial ein gewelltes Sieb (94) ist.

14. Siebanordnung nach Anspruch 12 oder 13, die ferner zumindest eine weitere Lage eines Siebmateriales aufweist, die oberhalb des zumindest einen Blattes aus Siebmaterial liegt.

15. Siebanordnung nach Anspruch 12, 13 oder 14, wobei das zumindest eine Blatt aus Siebmaterial mit der Stützstruktur vorzugsweise mit einem Heißkleber verbunden ist.

16. Vibrationstrennvorrichtung mit zumindest einer Siebanordnung nach einem der Ansprüche 12 bis 15.

17. Verfahren zum Herstellen einer Stützstruktur für ein Sieb nach einem der Ansprüche 1 bis 11, wobei das Verfahren die folgenden Schritte aufweist:
Bereitstellen eines Zuschnittes aus einem blattartigen Material, der so geschnitten, gepresst oder maschinell bearbeitet ist, dass er einen ersten Bereich und einen zweiten Bereich aufweist;
Herstellen einer Serie von voneinander entfernt gelegenen Öffnungen, Schlitzen oder Ausschnitten in dem ersten Bereich;
Herstellen von zumindest einer Öffnung in dem zweiten Bereich;
Herausbiegen oder Herausfalten von Stützrippen aus den Öffnungen, Schlitzen oder Ausschnitten in dem ersten Bereich;
Falten oder Biegen des zweiten Bereiches über den ersten Bereich, sodass eine Unterseite des zweiten Bereiches die oberen Oberflächen der Stützrippen berührt.

## Revendications

1. Structure de support pour un ensemble de tamis destiné à un séparateur vibrant, la structure de support comprenant un élément de corps fait en un matériau de type plaque , en une seule pièce, ledit élément de corps comportant une première partie (72) et une seconde partie (71), ladite première partie (72) ayant une pluralité de supports de nervure (78) courbés ou repliés à partir d'ouvertures, de fentes ou de découpes séparées (74) de ladite première partie (72), la seconde partie (71) comportant au moins une ouverture (76) à travers elle et courbée ou repliée sur la première partie (72) de sorte que le dessous de la seconde partie (71) se trouve en contact avec les surfaces de dessus des supports de nervure (78).

2. Structure de support selon la revendication 1, dans lequel la seconde partie (71) possède des parties latérales solidaires repliées pour former une paire d'éléments latéraux solidaires séparés.

3. Structure de support selon la revendication 1 ou 2, dans laquelle ladite seconde partie (71) présente à travers elle une pluralité d'ouvertures (76) définissant une configuration.

4. Structure de support selon la revendication 1, 2 ou 3, dans laquelle l'élément de corps (70) comprend, de plus, des parties d'extrémité solidaires repliées pour former une paire d'éléments d'extrémité solidaires séparés.

5. Structure de support selon la revendication 4, dans laquelle une partie de la paire de parties d'extrémité séparées (73, 75) est configurée avec une partie de support d'épaulement (75) pour venir en butée de façon étanche contre une extrémité de rebord de tamis d'un tamis adjacent.

6. Structure de support selon la revendication 5 dans laquelle une partie de la paire de parties d'extrémité séparées (73, 75) est configurée avec une partie en rebord (73) pour venir en butée de façon étanche contre une partie d'épaulement d'une extrémité d'un tamis adjacent.

7. Structure de support selon l'une quelconque des revendications 2 à 6, dans laquelle les parties latérales (36 ; 38) comprennent des sous-parties pliables pour former une bande de crochet sur chacun des côtés opposés de la structure de support.

8. Structure de support selon l'une quelconque des revendications précédentes, dans laquelle lesdits supports de nervures (78) possèdent des extrémités qui sont pliées en une partie de dessus plate ou suivant une configuration en C.

9. Support de structure selon l'une quelconque des revendications précédentes comprenant, de plus, une pluralité de nervures (28) connectées à, et au-dessous de la partie de l'élément de corps solidaire, la pluralité d'ouvertures de tamisage séparées.

10. Structure de support selon la revendication 9, dans laquelle la pluralité de nervures (28) sont essentiellement parallèles les unes aux autres.

11. Structure de support selon l'une quelconque des revendications précédentes, dans laquelle ladite structure de support est solidaire d'un moyen de filtration (24).

12. Ensemble de tamis comprenant une structure de support selon l'une quelconque des revendications précédentes et comprenant, de plus, au moins une plaque de matériau de tamisage (80) sur ladite (lesdites) ouverture(s) (76).

13. Ensemble de tamis selon la revendication 12, dans lequel ledit matériau de tamisage est un tamis à ondulations (94).

14. Ensemble de tamis selon la revendication 12 ou 13 comprenant, de plus, au moins une autre couche de matériau de tamisage recouvrant ladite (lesdites) plaque de matériau de tamisage.

15. Ensemble de tamis selon la revendication 12, 13 ou 14, dans lequel ladite (lesdites) plaque(s) de matériau de tamisage est (sont) liée(s) à la structure de support, de préférence, avec une colle fondue à chaud.

16. Séparateur vibrant comprenant au moins un ensemble de tamis selon l'une quelconque des revendications 12 à 15.

17. Procédé de fabrication d'un support de tamis selon l'une quelconque des revendications 1 à 11, le procédé comprenant les étapes consistant à :
fournir une ébauche de matériau de type en plaque qui soit découpée, pressée ou usinée de telle sorte qu'elle comporte une première partie et une seconde partie ;
pratiquer une série d'ouvertures, de fentes ou de découpes séparées, dans ladite première partie ;
pratiquer au moins une ouverture dans ladite seconde partie ;
courber ou des nervures de support à partir desdites ouvertures, fentes ou découpes de ladite première partie ;
replier ou courber ladite seconde partie sur ladite première partie de sorte qu'une partie de dessous de la seconde partie se trouve au contact des surfaces de dessus des supports de nervure.
